# EUROPÄISCHE PATENTSCHRIFT

(11) **EP 2 869 733 B1**
(45) Veröffentlichungstag und Bekanntmachung des Hinweises auf die Patenterteilung: **31.08.2016**
(21) Anmeldenummer: 13732146.9
(22) Anmeldetag: 27.06.2013
(51) Int. Cl.: A47C 20/04

(54) **VORRICHTUNG ZUR STEUERUNG EINES MÖBELANTRIEBS**
DEVICE FOR CONTROLLING A FURNITURE DRIVE
DISPOSITIF DE COMMANDE D'UN SYSTÈME D'ENTRAÎNEMENT POUR MEUBLE

(30) Priorität: 03.07.2012 DE 102012211508
(43) Veröffentlichungstag der Anmeldung: 13.05.2015
(73) Patentinhaber: Dewertokin GmbH, 32278 Kirchlengern (DE)
(72) Erfinder: OBERNDÖRFER, Andreas, 33739 Bielefeld (DE)
(74) Vertreter: Lippert, Stachow & Partner
(86) Internationale Anmeldenummer: PCT/EP2013/063469
(87) Internationale Veröffentlichungsnummer: WO 2014/005913

(56) Entgegenhaltungen:
- WO-A1-02/29284
- WO-A1-2007/093181
- WO-A1-2011/066836
- DE-U1- 29 811 566

## Beschreibung

Die Erfindung betrifft eine Vorrichtung zur Steuerung eines als Möbelantrieb ausgebildeten elektromotorischen Linearantriebs zum Verstellen von beweglich gelagerten Teilen von Liege- und Sitzmöbeln, bestehend aus mindestens einer über ein Schneckenradgetriebe antreibbaren Gewindespindel zur Verschiebung jeweils eines Hubelements, einem auf der jeweiligen Gewindespindel drehfest angeordneten Führungskörper, auf dem ein Schneckenrad drehbar gelagert ist, einer drehfest, aber axial verschieblich auf dem jeweiligen Führungskörper gelagerten Kupplungsmuffe, mit der das Schneckenrad und der Führungskörper mittels einer Klauenkupplung wahlweise verbindbar bzw. trennbar sind, je einem zur Verschiebung der Kupplungsmuffen dienenden Betätigungselement sowie einem Schaltmechanismus zum Antrieb des jeweiligen Betätigungselements.

Bei einem bekannten elektromotorischen Möbelantrieb der genannten Art (EP 0 968 675 B1) werden die Kupplungsmuffen mit Hilfe von Betätigungsstiften verschoben, um die Gewindespindeln mit den Schneckenrädern zu kuppeln bzw. von diesen zu entkuppeln. Die Bewegung der Betätigungsstifte wird entweder mit Hilfe von Handhebeln oder durch Bowdenzüge bewirkt. Die relativ zueinander in Axialrichtung der Gewindespindeln bewegbaren Kupplungshälften werden dabei mit relativ langsamer Geschwindigkeit bewegt, d.h., dass die Stirnverzahnungen bzw. Klauen der Klauenkupplung beim Entkuppeln nur langsam voneinander getrennt und beim Einkuppeln wieder allmählich aufeinander zu bewegt werden. Diese langsamen Bewegungen der Kupplungshälften führen bei den Betriebszuständen, bei denen "nahezu ausgekuppelt" und "nahezu eingekuppelt" ist, zu starken Beanspruchungen der Verzahnungen, weil unter Last bzw. unter Drehmoment geschaltet wird. Bei diesem Schaltmechanismus kann es zu starkem Verschleiß der Kupplungselemente führen. Bei normalem Gebrauch spielt dies zwar nur eine geringfügige Rolle, zumal die Verschleißteile so ausgelegt werden können, dass sie die gleiche Lebensdauer wie die entsprechenden Möbel aufweisen. Wenn jedoch die Möbelteile, wie beispielsweise im Krankenhaus- bzw. Pflegebereich, sehr häufig verstellt werden müssen, so kann sich der Verschleiß der Kupplungsteile unter Umständen nachteilig auswirken.

Der Erfindung liegt daher die Aufgabe zugrunde, eine Kupplungsmöglichkeit zu schaffen, bei der die Kupplungshälften beim Ein- und Auskuppeln weitestgehend geschont werden.

Erfindungsgemäß wird diese Aufgabe dadurch gelöst, dass als Schaltmechanismus ein Knauf vorgesehen ist, der über ein Federelement mit einer drehbar gelagerten Exzenterscheibe verbunden ist, dass die Exzenterscheibe in Abständen angeordnete Rastnuten aufweist, die vorgegebenen Schaltstellungen des Knaufs zugeordnet sind, dass an der Exzenterscheibe eine vorgespannte Nockenfeder anliegt, die mit einem an dieser vorgesehenen Nocken in die Rastnuten einrastbar ist, und dass die Exzenterscheibe in Wirkverbindung mit den Betätigungselementen der Kupplungsmuffen steht.

Durch die erfindungsgemäße Konstruktion wird eine völlig neue Kupplungsmechanik geschaffen, bei der das Auskuppeln und das Einkuppeln schlagartig realisiert wird. Dabei werden die Zwischenstellungen des Knaufs durch den Einfluss der vorgespannten Federelemente rasch durchlaufen, sodass das Ein- und Auskuppeln sehr kurzzeitig erfolgt und dadurch ein länger währendes Übereinanderschleifen der Kupplungshälften vermieden wird.

Die neue Konstruktion ist sowohl bei Doppelantrieben und Einzelantrieben als auch bei abgewandelten Antrieben anwendbar.

Die Schneckengetriebe sowie die durch diese angetriebenen Gewindespindeln können, sofern es sich um einen Doppelantrieb handelt, in verschiedenen Positionen angeordnet sein, beispielsweise hintereinander, nebeneinander und im Winkelversatz zueinander. In einem bevorzugten Ausführungsbeispiel sind bei einem Doppelantrieb zwei hintereinander angeordnete und zueinander fluchtende Gewindespindeln vorgesehen.

Der Knauf, der zur Betätigung des Schaltmechanismus vorgesehen ist, ist vorzugsweise als Drehknauf ausgebildet. Alternativ kann der Knauf aber auch verschiebbar gestaltet sein.

Die Exzenterscheibe ist zweckmäßig drehbar in einem Schaltergehäuse gelagert.

Der vorzugsweise als Drehknauf ausgebildete Knauf, der zum Auslösen des Schaltmechanismus dient, kann dabei in einer runden Öffnung der Exzenterscheibe ebenfalls drehbar gelagert sein.

Um die Kupplungsvorgänge mit Hilfe des Drehknaufs optimal einstellen zu können, ist die Exzenterscheibe zweckmäßig symmetrisch ausgebildet und weist einen größeren Durchmesser und einen kleineren Durchmesser auf, wobei die Abmessungen des größeren Durchmessers zu beiden Seiten des Drehpunktes der Exzenterscheibe und auch die Abmessungen des kleineren Durchmessers zu beiden Seiten des Drehpunktes der Exzenterscheibe gleich lang sind.

Der Bereich des größeren Durchmessers der Exzenterscheibe ist vorzugsweise auf der einen Seite schmaler als auf der diametral gegenüberliegenden Seite ausgebildet. Auf diese Weise kann mit wenigen Winkelstellungen des Drehknaufs sämtliche erforderlichen Einstellmöglichkeiten erzielt werden.

Das Federelement, welches das schlagartige Auskuppeln und Einkuppeln realisieren soll, ist vorzugsweise als Blattfeder ausgebildet, die mit einem Ende in der Öffnung der Exzenterscheibe befestigt ist und mit ihrem anderen Ende zwischen zwei an dem Drehknauf vorgesehenen Anschlagstiften sitzt.

In ihrer Normalstellung werden die Kupplungsmuffen unter Federvorspannung in ihrer gekuppelten Stellung gehalten. Dabei können die Kupplungsmuffen mittels mehrerer über deren Stirnseite verteilt angeordneter Schraubenfedern, die sich gegen das Schneckenrad abstützen, vorgespannt sein.

Die Betätigungselemente zur Verschiebung der Kupplungsmuffen sind vorzugsweise als Schaltklauen ausgebildet, die mit beidseitig angeordneten Führungsstiften auf gegenüberliegenden Seiten der jeweiligen Kupplungsmuffe in eine auf dem Umfang der Kupplungsmuffe ausgebildete Führungsnut eingreifen.

Die Schaltklauen sind zweckmäßig schwenkbar angeordnet, indem sie auf senkrecht zu den Gewindespindeln angeordneten Schwenkachsen gelagert sind.

An ihren Rückseiten weisen die Schaltklauen vorspringende Mitnehmerstifte auf, die mittelbar oder unmittelbar durch die Rotation der Exzenterscheibe betätigbar sind.

Zur Übertragung der Kraft von der Exzenterscheibe auf die Mitnehmerstifte der Schaltklauen können Schieber vorgesehen sein, die in Axialrichtung der Gewindespindeln geführt sind, wobei die Schieber bei Drehung der Exzenterscheibe beim Kontakt mit deren großem Durchmesser die durch die Schraubenfedern vorgespannten Kupplungsmuffen entgegen deren Federvorspannung in die entkuppelte Stellung drücken.

Im entkuppelten Zustand der Kupplungsmuffen, bei der die Drehverbindung zwischen Motor und Spindel getrennt ist, kann eine Notabsenkung realisiert werden, sodass auch bei Stromausfall oder in einer Notlage eine zuverlässige und schnelle Absenkung der beweglichen Möbelteile erfolgen kann, was besonders im Krankenhaus- und Pflegebereich hin und wieder erforderlich ist.

Die Erfindung ist in der Zeichnung beispielhaft veranschaulicht und im Nachstehenden im Einzelnen anhand der Zeichnung beschrieben. Es zeigen:
- Fig. 1:: Die perspektivische Ansicht eines elektromotorischen Linearantriebs in Form eines Doppelantriebs,
- Fig. 2:: die wesentlichen Teile des Antriebsmechanismus, teilweise in Explosionsdarstellung, und zwar von der Rückseite der in Fig. 1 gezeigten Darstellung aus gesehen,
- Fig. 3:: in vergrößerter Darstellung eine Ansicht des Schaltmechanismus von der Innenseite des Gehäuses aus gesehen, und zwar im Normalbetriebszustand,
- Fig. 4:: die gleiche Ansicht wie Fig. 3 im vorgespannten Zustand des Schaltmechanismus und
- Fig. 5:: den eingerasteten Folgezustand.

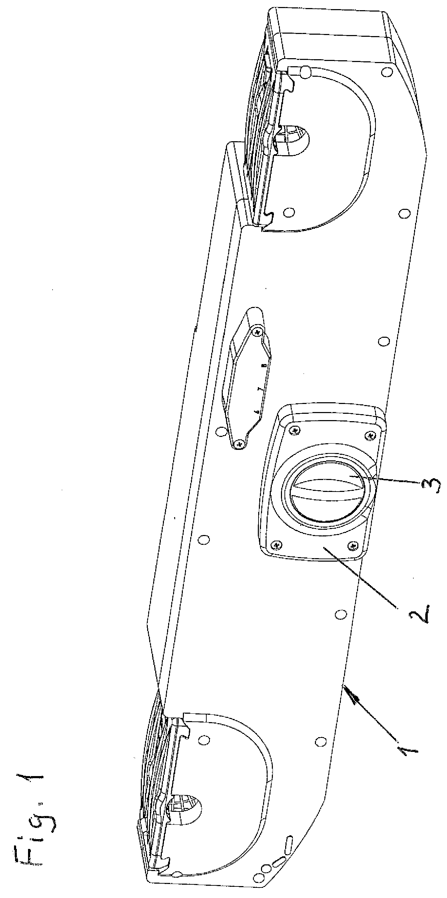

In Fig. 1 der Zeichnung ist eine Gesamtansicht des Doppelantriebs 1 dargestellt. In der Mitte des Doppelantriebs 1 ist an die Seitenwand ein Schaltergehäuse 2 angeschraubt, in dem ein von außen zugänglicher, von Hand zu betätigender Drehknauf 3 angeordnet ist.

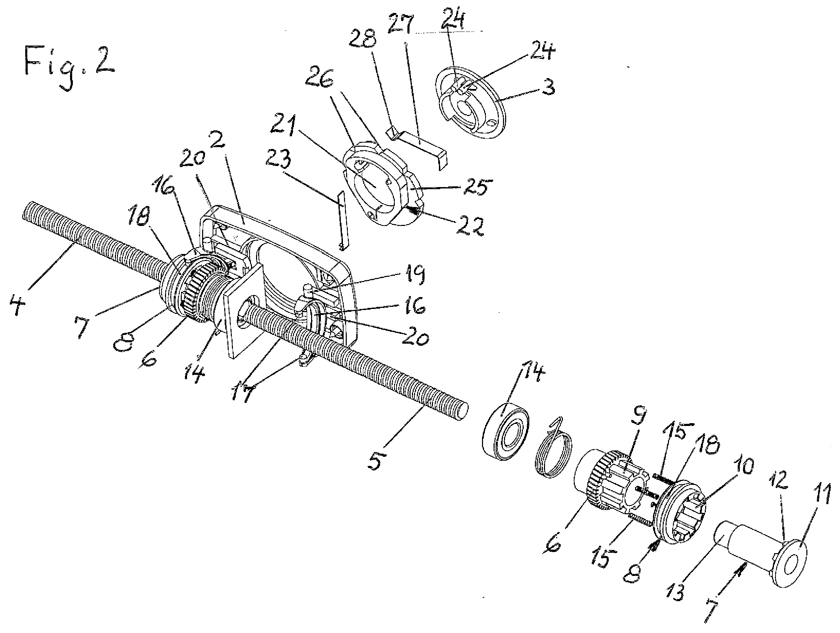

In Fig. 2 sind die wesentlichen Teile des Innenlebens des Doppelantriebs 1 dargestellt, und zwar von der Rückseite der in Fig. 1 gezeigten Darstellung aus gesehen.

Wesentlicher Bestandteil des Antriebsmechanismus sind zwei Gewindespindeln 4 und 5, die in dem Gehäuse des Doppelantriebs 1 gelagert sind. Die beiden Gewindespindeln 4 und 5, die fluchtend zueinander angeordnet sind, werden jeweils über ein Schneckenradgetriebe angetrieben, von denen in Fig. 2 lediglich das jeweilige Schneckenrad 6 gezeigt ist. Wenn die Gewindespindeln 4 und 5 entweder gleichzeitig oder wahlweise angetrieben werden, so werden dadurch an sich bekannte, in der Zeichnung nicht dargestellte Hubelemente verschoben, mit denen bewegliche Möbelteile angehoben und abgesenkt werden können.

Auf jeder der Gewindespindeln 4 und 5 ist ein Führungskörper 7 dreh- und schiebefest angeordnet. Mittels einer axial verschieblichen Kupplungsmuffe 8 ist das drehbar auf dem Führungskörper 7 gelagerte Schneckenrad 6 mit dem Führungskörper 7 kuppelbar bzw. von diesem entkuppelbar. Um dies zu erreichen, ist die Kupplungsmuffe 8 axial verschieblich, aber drehfest mit dem Schneckenrad 6 verbunden, und zwar sitzt dabei die Kupplungsmuffe 8 auf einem keilwellenförmig ausgebildeten Fortsatz 9 des Schneckenrades 6, wobei das Innenprofil 10 der Kupplungsmuffe 8 dem Keilwellenprofil des Schneckenradfortsatzes 9 angepasst ist.

Der drehfest und axial unverschieblich auf der jeweiligen Gewindespindel 4 bzw. 5 sitzende Führungskörper 7 ist an seinem dem Schneckenrad 6 abgewandten Ende mit einem Flansch 11 versehen, der an seiner der Kupplungsmuffe 8 zugewandten Innenseite mit einem Gegenprofil 12 zu dem Innenprofil 10 der Kupplungsmuffe 8 versehen ist. Durch axiale Verschiebung der Kupplungsmuffe 8 kann also das Schneckenrad 6 wahlweise mit der jeweiligen Gewindespindel 4 bzw. 5 gekuppelt oder von dieser entkuppelt werden. Das Innenprofil 10 der Kupplungsmuffe 8 und das an dem Flansch 11 des Führungskörpers 7 vorgesehene Gegenprofil 12 wirken dabei nach Art einer Klauenkupplung.

Auf der rechten Seite in Fig. 2 sind die Einzelteile in Explosionsdarstellung gezeigt, während auf der linken Seite die Einzelteile im zusammengefügten Zustand dargestellt sind. Dabei ist zu erkennen, dass die zur Mitte des Doppelantriebs 1 weisenden abgesetzten Enden 13 des Führungskörpers 7 in jeweils einem Kugellager 14 sitzen.

Die Kupplungsmuffen 8, die drehfest, aber axial verschieblich relativ zu dem jeweiligen Schneckenrad 6 gelagert sind, werden unter Vorspannung in ihrer gekuppelten Stellung gehalten, bei der das Innenprofil 10 der jeweiligen Kupplungsmuffe 8 in das entsprechende, an dem Führungskörper 7 vorgesehene Gegenprofil 12 eingerastet ist. Die Federvorspannung der Kupplungsmuffen 8 wird durch mehrere über die den jeweiligen Schneckenrad 6 zugewandte Stirnseite der Kupplungsmuffe verteilt angeordnete Schraubenfedern 15 erzielt, die sich gegen das Schneckenrad 6 abstützen.

Zur Verschiebung jeder Kupplungsmuffe 8 dient ein als Schaltklaue 16 ausgebildetes Betätigungselement. Die Schaltklauen 16 sind mit beidseitig angeordneten Führungsstiften auf gegenüberliegenden Seiten der Kupplungsmuffe 8 versehen und greifen in eine auf den Umfang der Kupplungsmuffe 8 ausgebildete Führungsnut 18 ein.

Die Schaltklauen 16 sind auf senkrecht zu den Gewindespindeln 4 bzw. 5 angeordneten Schwenkachsen 19 gelagert. An ihren Rückseiten weisen die Schaltklauen 16 vorspringende Mitnehmerstifte auf, die in der Zeichnung allerdings nicht zu erkennen sind. Die Mitnehmerstifte werden mit Hilfe von Schiebern 20 bewegt, wodurch eine Verschwenkung der Schaltklauen 16 erzeugt wird.

Die Betätigung der Schaltklauen 16 erfolgt über den in Fig. 1 dargestellten, in dem Schaltergehäuse 2 vorgesehenen Drehknauf 3.

In Fig. 2 ist in perspektivischer Darstellung die Rückseite des Drehknaufs 3 dargestellt.

Wie aus der entsprechenden Explosionszeichnung zu erkennen ist, ist der Drehknauf 3 in einer runden Öffnung einer Exzenterscheibe 22 gelagert. Die Exzenterscheibe 22 ist ihrerseits drehbar in dem Schaltergehäuse 2 gelagert.

In der runden Öffnung 21 der Exzenterscheibe 22 ist eine fest mit der Exzenterscheibe 22 verbindbare Blattfeder 23 angeordnet, die in Wirkverbindung mit dem Drehknauf 3 steht.

Die mit ihrem einen Ende in der runden Öffnung 21 der Exzenterscheibe 22 befestigte Blattfeder 23 sitzt mit ihrem anderen Ende zwischen zwei an dem Drehknauf 3 vorgesehenen Anschlagstiften 24. Dabei greift die Blattfeder 23 mit Spiel zwischen die beiden Anschlagstifte 24, sodass sie in dem durch die Anschlagstifte 24 gebildeten Zwischenraum beweglich ist.

Die Exzenterscheibe 22 ist mit einem im Wesentlichen kreisförmigen Flansch 25 versehen, auf dem in Abständen angeordnete Rastnuten 26 ausgebildet sind.

An der Exzenterscheibe 22 liegt eine vorgespannte Nockenfeder 27 an, die mit einem an dieser vorgesehenen Nocken 28 in die Rastnuten 26 einrastbar ist. Jede Raststellung entspricht dabei einer bestimmten Schaltstellung des Drehknaufs. Rechts und links von der Mittelstellung bzw. den Normalbetriebszustand bestimmenden Rastnut sind in gleichen Abständen je zwei weitere Rastnuten 26 vorgesehen.

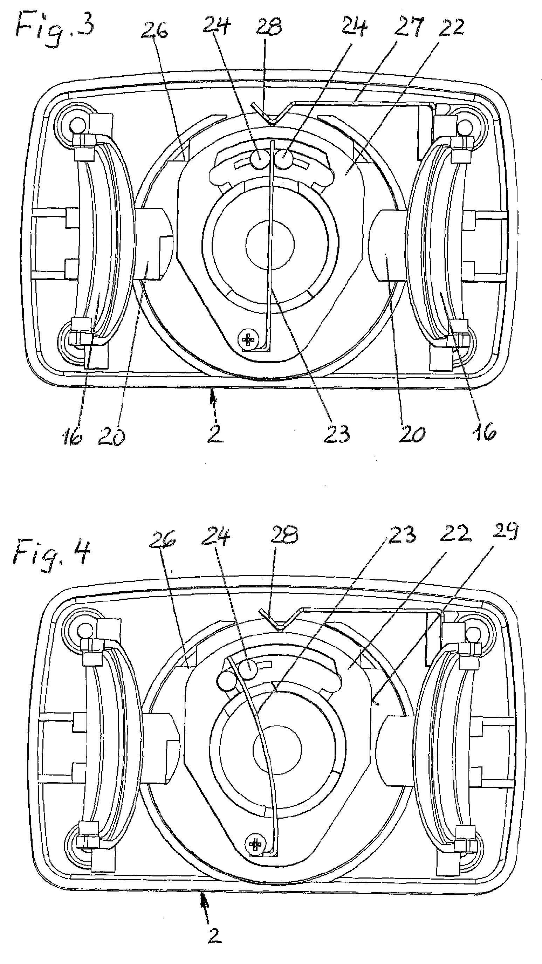

In den Figuren 3 bis 5 sind verschiedene Stellungen des Drehknaufs 3 dargestellt, die den schlagartigen Schaltvorgang veranschaulichen.

In Fig. 3 ist der Normalbetriebszustand, also die neutrale Mittelstellung des Drehknaufs 3 veranschaulicht. In diesem Normalbetriebszustand sind die Schaltklauen 16 jeweils nach außen verschwenkt, d.h., dass beide Klauenkupplungen sich im eingekuppelten Zustand befinden. Die Schieber 20 sind dabei inaktiv und werden von der Exzenterscheibe 22 noch nicht berührt. Insofern wirken also ausschließlich die in Fig. 2 dargestellten Schraubenfedern 15, die die jeweilige Kupplungsmuffe 8 in der eingekuppelten Stellung halten.

Wenn jetzt gemäß Fig. 4 der Drehknauf 3 in der Zeichnung entgegen dem Uhrzeigersinn leicht verdreht wird, so wird das zwischen den Anschlagstiften 24 des Drehknaufs 3 sitzende freie Ende der Blattfeder 23 nach links verbogen, sodass sich allmählich eine Spannung aufbaut. Die Exzenterscheibe 22 wird in dieser Position aber immer noch durch die Nockenfeder 27 festgehalten, da deren Nocken 28 fest in der oberen Rastnut 26 sitzt.

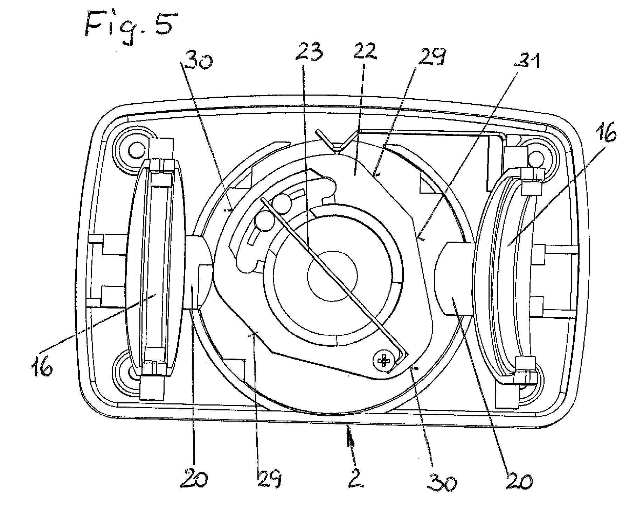

Wenn der Drehknauf 3 dann in die in Fig. 5 dargestellte 45°-Stellung weitergedreht wird, so wird die Exzenterscheibe 22 aufgrund der Kraft der gespannten Blattfeder 23 schlagartig um 45° nach links gedreht, wobei gleichzeitig der Nocken 28 der Nockenfeder 27 in die folgende Rastnut 26 einrastet, die um 45° gegenüber der mittleren Rastnut 26 versetzt ist. In diesem Betriebszustand ist die Blattfeder 23, wie aus Fig. 5 ersichtlich, entspannt, d.h., sie nimmt eine gestreckte Position ein.

Die Exzenterscheibe 22 ist symmetrisch ausgebildet und weist einen größeren Durchmesser 30 und einen kleineren Durchmesser 29 auf, wobei die Abmessungen des größeren Durchmessers 30 zu beiden Seiten des Drehpunkts der Exzenterscheibe 22 und auch die Abmessungen des kleineren Durchmessers zu beiden Seiten des Drehpunkts der Exzenterscheibe 22 gleich lang sind.

Während in den Figuren 3 und 4, also im Normalbetriebszustand, die beiden Schieber 20 dem Bereich des kleineren Durchmessers 29 der Exzenterscheibe 22 gegenüberliegen und somit nicht betätigt werden, kommt in der in Fig. 5 dargestellten 45°-Position der linke Schieber 20 mit dem größeren Durchmesser 30 der Exzenterscheibe 22 in Kontakt, wodurch der linke Schieber 20 nach links verschoben und dadurch die linke Schaltklaue 16 in die entkuppelnde Stellung verdreht wird.

Wie insbesondere aus den Figuren 3 bis 5 zu erkennen ist, ist die Exzenterscheibe 22 im Bereich des größeren Durchmessers 30 auf der einen Seite, nämlich in der Zeichnung unten, schmaler als auf der diametral gegenüberliegenden Seite ausgebildet. Dieser schmalere Bereich 31 bewirkt, dass der rechte Schieber 20 noch nicht mit dem größeren Durchmesser 30 der Exzenterscheibe 22 in Berührung kommt und somit inaktiv bleibt, d.h., dass in dieser nach links verschwenkten Stellung des Drehknaufs 3 nur die linke Klauenkupplung auskuppelt, während die rechte Klauenkupplung im eingekuppelten Zustand verbleibt.

Analog geschieht dies, wenn der Drehknauf 3 aus seiner in Fig. 3 dargestellten Mittelposition nach rechts im Uhrzeigersinn verdreht wird. Wenn der Drehknauf 3 dann die rechte 45°-Position erreicht, wird der rechte Schieber 20 nach rechts verschoben, sodass die Klauenkupplung ausgekuppelt wird, während auf der linken Seite der linke Schieber 20 noch nicht berührt wird, sodass die linke Klauenkupplung eingekuppelt bleibt.

Wenn der Drehknauf 3 dann weiter nach rechts oder links in eine 90°-Position verdreht wird, so gelangen beide Schieber 20 in den Bereich des großen Durchmessers 30 der Exzenterscheibe 22, d.h., dass beide Schieber 20 nach außen verschoben werden und somit beide Schaltklauen 16 derart verschwenkt werden, dass beide Klauenkupplung entkuppelt sind.

### Vorrichtung zur Steuerung eines Möbelantriebs

### Bezugszeichenliste

- 1: Doppelantrieb
- 2: Schaltergehäuse
- 3: Drehknauf
- 4: Gewindespindel
- 5: Gewindespindel
- 6: Schneckenrad
- 7: Führungskörper
- 8: Kupplungsmuffen
- 9: Fortsatz
- 10: Innenprofil
- 11: Flansch
- 12: Gegenprofil
- 13: abgesetzte Enden
- 14: Kugellager
- 15: Schraubenfedern
- 16: Schaltklauen
- 17: Führungsstifte
- 18: Führungsnut
- 19: Schwenkachsen
- 20: Schieber
- 21: runde Öffnung
- 22: Exzenterscheibe
- 23: Blattfeder
- 24: Anschlagstifte
- 25: Flansch
- 26: Rastnuten
- 27: Nockenfeder
- 28: Nocken
- 29: kleiner Durchmesser der Exzenterscheibe 22
- 30: großer Durchmesser der Exzenterscheibe 22
- 31: schmaler Bereich der Exzenterscheibe 2

## Patentansprüche

1. Vorrichtung zur Steuerung eines als Möbelantrieb ausgebildeten elektromotorischen Linearantriebs zum Verstellen von beweglich gelagerten Teilen von Liege- und Sitzmöbeln, bestehend aus mindestens einer über ein Schneckenradgetriebe antreibbaren Gewindespindel (4, 5) zur Verschiebung jeweils eines Hubelements, einem auf der jeweiligen Gewindespindel (4, 5) drehfest angeordneten Führungskörper (7), auf dem ein Schneckenrad (6) drehbar gelagert ist, einer drehfest, aber axial verschieblich auf dem jeweiligen Führungskörper (7) gelagerten Kupplungsmuffe (8), mit der das Schneckenrad (6) und der Führungskörper (7) mittels einer Klauenkupplung wahlweise verbindbar bzw. trennbar sind, je einem zur Verschiebung der Kupplungsmuffen (8) dienenden Betätigungselement sowie einem Schaltmechanismus zum Antrieb des jeweiligen Betätigungselements, **dadurch gekenn- zeichnet,** dass als Schaltmechanismus ein Knauf vorgesehen ist, der über ein Federelement mit einer drehbar gelagerten Exzenterscheibe (22) verbunden ist, dass die Exzenterscheibe (22) in Abständen angeordnete Rastnuten (26) aufweist, die vorgegebenen Schaltstellungen des Knaufs zugeordnet sind, dass an der Exzenterscheibe (22) eine vorgespannte Nockenfeder (27) anliegt, die mit einem an dieser vorgesehenen Nocken (28) in die Rastnuten (26) einrastbar ist, und dass die Exzenterscheibe (22) in Wirkverbindung mit den Betätigungselementen der Kupplungsmuffen (8) steht.

2. Vorrichtung nach Anspruch 1 **dadurch gekenn - zeichnet ,** dass der Knauf als Drehknauf (3) ausgebildet ist.

3. Vorrichtung nach Anspruch 1, **dadurch gekennzeichnet, dass** der Knauf verschiebbar ausgebildet ist.

4. Vorrichtung nach einem der Ansprüche 1 bis 3, zur Steuerung eines als Doppelantrieb ausgebildeten elektromotorischen Linearantriebs, **dadurch gekennzeichnet, dass** zwei hintereinander angeordnete und zueinander fluchtende Gewindespindeln (4, 5) vorgesehen sind.

5. Vorrichtung nach einem der Ansprüche 1 bis 4, **dadurch gekennzeichnet, dass** die Exzenterscheibe (22) drehbar in einem Schaltergehäuse (2) gelagert ist.

6. Vorrichtung nach Anspruch 2 und 5, **dadurch ge - kennzeichnet,** dass der Knauf in einer runden Öffnung (21) mit der Exzenterscheibe (22) drehbar gelagert ist.

7. Vorrichtung nach einem der Ansprüche 1 bis 6, **dadurch gekennzeichnet, dass** die Exzenterscheibe (22) symmetrisch ausgebildet ist und einen größeren Durchmesser (30) und einen kleineren Durchmesser (29) aufweist, wobei die Abmessungen des größeren Durchmessers (30) zu beiden Seiten des Drehpunktes der Exzenterscheibe (22) und auch die Abmessungen des kleineren Durchmessers (29) zu beiden Seiten des Drehpunktes der Exzenterscheibe (22) gleich lang sind.

8. Vorrichtung nach Anspruch 7, **dadurch gekenn- zeichnet,** dass der Bereich des größeren Durchmessers (30) der Exzenterscheibe (22) auf einer Seite (29) schmaler als auf der diametral gegenüberliegenden Seite ausgebildet ist.

9. Vorrichtung nach einem der Ansprüche 1 bis 8, **dadurch gekennzeichnet, dass** das Federelement als Blattfeder (23) ausgebildet ist, die mit einem Ende in der Öffnung der Exzenterscheibe (22) befestigt ist und mit ihrem anderen Ende zwischen zwei an dem Drehknauf (3) vorgesehenen Anschlagstiften (24) sitzt.

10. Vorrichtung nach einem der Ansprüche 1 bis 9, **dadurch gekennzeichnet, dass** die Kupplungsmuffen (8) unter Federvorspannung in ihrer gekuppelten Stellung gehalten werden.

11. Vorrichtung nach Anspruch 10, **dadurch gekenn - zeichnet,** dass die Kupplungsmuffen (8) mittels mehrerer über deren Stirnseite verteilt angeordneter Schraubenfedern (15), die sich gegen das Schneckenrad (6) abstützen, vorgespannt sind.

12. Vorrichtung nach einem der Ansprüche 1 bis 11, **dadurch gekennzeichnet, dass** die Betätigungselemente zur Verschiebung der Kupplungsmuffen (8) als Schaltklauen (16) ausgebildet sind, die mit beidseitig angeordneten Führungsstiften (17) auf gegenüberliegenden Seiten der jeweiligen Kupplungsmuffe (8) in eine auf dem Umfang der Kupplungsmuffe (8) ausgebildete Führungsnut (18) eingreifen.

13. Vorrichtung nach Anspruch 12, **dadurch gekenn- zeichnet,** dass die Schaltklauen (16) auf senkrecht zu den Gewindespindeln (4, 5) angeordneten Schwenkachsen (19) gelagert sind.

14. Vorrichtung nach Anspruch 13, **dadurch gekenn - zeichnet,** dass die Schaltklauen (16) an ihren Rückseiten vorspringende Mitnehmerstifte aufweisen, die mittelbar oder unmittelbar durch die Rotation der Exzenter-Scheibe (22) betätigbar sind, um die Schaltklauen zu verschwenken.

15. Vorrichtung nach Anspruch 14, **dadurch gekennzeichnet, dass** zur Übertragung der Kraft von der Exzenterscheibe (22) auf die Mitnehmerstifte der Schaltklauen (16) Schieber (20) vorgesehen sind, die in Axialrichtung der Gewindespindeln (4, 5) geführt sind und dass die Schieber (20) bei Drehung der Exzenterscheibe (22) beim Kontakt mit deren großem Durchmesser (30) die durch die Schraubenfedern (15) vorgespannten Kupplungsmuffen (8) entgegen deren Federvorspannung in die entkuppelte Stellung drücken.

## Claims

1. A device for controlling an electric motor-actuated linear drive in the form of a furniture drive for adjusting moveably mounted parts of lying and seating furniture, comprising at least one threaded spindle (4, 5) drivable by way of a worm gear transmission for displacement of a respective stroke element, a guide body (7) which is non-rotatably arranged on the respective threaded spindle (4, 5) and on which a worm gear (6) is rotatably mounted, a coupling sleeve (8) which is mounted non-rotatably but axially displaceably on the respective guide body (7) and with which the worm gear (6) and the guide body (7) can be selectively connected or separated by means of a claw coupling, a respective actuating element serving for displacement of the coupling sleeves (8) and a shift mechanism for driving the respective actuating element, **characterised in that** provided as the shift mechanism is a knob connected by way of a spring element to a rotatably mounted eccentric disc (22), the eccentric disc (22) has latching grooves (26) which are arranged at spacings and which are associated with predetermined shift positions of the knob, a prestressed cam spring (27) bears against the eccentric disc (22) and is latchable with a cam projection (28) provided on the spring into the latching grooves (26), and the eccentric disc (22) is operatively connected to the actuating elements of the coupling sleeves (8).

2. A device according to claim 1 **characterised in that** the knob is in the form of a rotary knob (3).

3. A device according to claim 1 **characterised in that** the knob is adapted to be displaceable.

4. A device according to one of claims 1 to 3 for controlling an electric motor-actuated linear drive in the form of a dual drive, **characterised in that** there are provided two successively arranged and mutually aligned threaded spindles (4, 5).

5. A device according to one of claims 1 to 4 **characterised in that** the eccentric disc (22) is mounted rotatably in a switch housing (2).

6. A device according to claims 2 and 5 **characterised in that** the knob is mounted rotatably in a round opening (21) with the eccentric disc (22).

7. A device according to one of claims 1 to 6 **characterised in that** the eccentric disc (22) is symmetrical and has a larger diameter (30) and a smaller diameter (29), wherein the dimensions of the larger diameter (30) at both sides of the point of rotation of the eccentric disc (22) and also the dimensions of the smaller diameter (29) at both sides of the point of rotation of the eccentric disc (22) are of equal length.

8. A device according to claim 7 **characterised in that** the region of the larger diameter (30) of the eccentric disc (22) is narrower on one side (29) than on the diametrally opposite side.

9. A device according to one of claims 1 to 8 **characterised in that** the spring element is in the form of a leaf spring (23) which is fixed with one end in the opening of the eccentric disc (22) and sits with its other end between two abutment pins (24) provided on the rotary knob (3).

10. A device according to one of claims 1 to 9 **characterised in that** the coupling sleeves (8) are held in their coupled position under a spring bias.

11. A device according to claim 10 **characterised in that** the coupling sleeves (8) are biased by means of a plurality of coil springs (15) which are arranged distributed over the end of the sleeves and which are supported against the worm gear (6).

12. A device according to one of claims 1 to 11 **characterised in that** the actuating elements for displacement of the coupling sleeves (8) are in the form of shift claws (16) which engage with guide pins (17) arranged at both sides on mutually opposite sides of the respective coupling sleeve (8) into a guide groove (18) on the periphery of the coupling sleeve (8).

13. A device according to claim 12 **characterised in that** the shift claws (16) are mounted on pivot axis members (19) arranged perpendicularly to the threaded spindles (4, 5).

14. A device according to claim 13 **characterised in that** the shift claws (16) have entrainment pins which project at their rear sides and which can be actuated directly or indirectly by the rotation of the eccentric disc (22) to pivot the shift claws.

15. A device according to claim 14 **characterised in that** sliders (20) are provided for transmission of the force from the eccentric disc (22) to the entrainment pins of the shift claws (16), which sliders are guided in the axial direction of the threaded spindles (4, 5), and the sliders (20) upon rotation of the eccentric disc (22) in contact with the large diameter (30) thereof urge the coupling sleeves (8) which are biased by the coil springs (15) into the uncoupled position against the spring bias of the springs.

## Revendications

1. Dispositif de commande d'un système d'entraînement linéaire par un moteur électrique réalisé comme système d'entraînement pour meuble destiné à déplacer des pièces supportées de manière mobile des meubles sièges ou couchettes, le dispositif se composant au moins d'une tige filetée (4, 5) susceptible d'être entraînée par un engrenage à roue à vis sans fin, pour le déplacement respectif d'un élément de levage, d'un corps de guidage (7) disposé sur la tige filetée (4, 5) respective de manière solidaire en rotation, sur ledit corps de guidage est montée de manière rotative une roue à vis sans fin (6), d'un manchon d'accouplement (8) monté sur le corps de guidage (7) respectif de manière solidaire en rotation mais mobile axialement, la roue à vis sans fin (6) et le corps de guidage (7) pouvant être, au choix, reliés à ou détachés du manchon d'accouplement par un accouplement à griffes, d'un actionneur respectif servant au déplacement des manchons d'accouplement (8) et d'un mécanisme de manouvre pour la commande respective de l'actionneur, **caractérisé en ce que** comme mécanisme de manouvre il est prévu un bouton relié à un disque excentrique (22) monté rotatif par un élément ressort, que le disque excentrique (22) comporte des rainures d'encliquetage (26)espacées qui sont associées aux positions de manouvre prédéfinies dudit bouton, qu'un ressort de came (27) précontraint s'applique contre le disque excentrique (22), ressort de came qui peut encliqueté dans lesdites rainures d'encliquetage (26) par une came (28) prévue audit ressort de came, et que le disque excentrique (22) est en liaison active avec les actionneurs des manchons d'accouplement (8).

2. Dispositif selon la revendication 1, **caractérisé en ce que** le bouton est réalisé comme bouton rotatif (3).

3. Dispositif selon la revendication 1, **caractérisé en ce que** le bouton est réalisé de manière mobile.

4. Dispositif selon l'une des revendications 1 à 3, destiné à commander un système d'entraînement linéaire par un moteur électrique réalisé comme un entraînement double, **caractérisé en ce qu'**il sont prévus deux tiges filetées (4, 5) disposées l'une derrière l'autre et en alignement l'une par rapport à l'autre.

5. Dispositif selon l'une des revendications 1 à 4, **caractérisé en ce que** le disque excentrique (22) est monté rotatif dans un boîtier de commutateur (2).

6. Dispositif selon la revendication 2 et 5, **caractérisé en ce que** le bouton avec le disque excentrique est monté rotatif dans une ouverture circulaire (21).

7. Dispositif selon l'une des revendications 1 à 6, **caractérisé en ce que** le disque excentrique (22) est réalisé de manière symétrique et présente un diamètre plus grand (30) et un diamètre plus petit (29), les dimensions du diamètre plus grand (30) étant de même longueur vers les deux côtés du pivot du disque excentrique (22), et aussi les dimensions du diamètre plus petit (29) étant de même longueur vers les deux côtés du pivot du disque excentrique (22).

8. Dispositif selon la revendication 7, **caractérisé en ce que** la zone du diamètre plus grand (30) du disque excentrique (22) est plus étroit sur l'un côté (29) que sur le côté diamétralement opposé.

9. Dispositif selon l'une des revendications 1 à 6, **caractérisé en ce que** l'élément de ressort est réalisé comme ressort à lame (23) qui est fixé dans l'ouverture du disque excentrique (22) par l'une de ses extrémités et qui se situe entre deux broches d'arrêt (24) prévues au bouton rotatif (3) par l'autre de ses extrémités.

10. Dispositif selon l'une des revendications 1 à 6, **caractérisé en ce que** les manchons d'accouplement (8) sont maintenus à leur position accouplée sous l'effet d'une précontrainte par ressort.

11. Dispositif selon la revendication 7, **caractérisé en ce que** les manchons d'accouplement (8) sont précontraints au moyen de plusieurs ressorts hélicoïdaux (15) arrangés de manière repartis sur la face frontale desdits manchons d'accouplement et s'appuyant contre la roue à vis sans fin (6).

12. Dispositif selon l'une des revendications 1 à 11, **caractérisé en ce que** les actionneurs pour le déplacement des manchons d'accouplement (8) sont réalisés sous la forme de crabot (16) qui engagent dans une rainure de guidage (18) formée sur la circonférence du manchon d'accouplement (8) par des goupilles de guidage (17) disposées de deux côtés sur les côtés opposées du manchon d'accouplement (8) respectif.

13. Dispositif selon la revendication 12, **caractérisé en ce que** les crabots (16) sont montés sur des axes de pivotement (19) disposés verticalement par rapport aux tiges filetées (4, 5).

14. Dispositif selon la revendication 13, **caractérisé en ce que** les crabots (16) présentent des broches d'entraînement saillantes sur ses faces arrières, broches d'entraînement qui peuvent être actionnées indirectement ou directement par la rotation du disque excentrique (22), pour pivoter lesdits crabots.

15. Dispositif selon la revendication 14, **caractérisé en ce que** pour la transmission de force du disque excentrique (22) aux broches d'entraînement des crabots (16), il sont prévus des coulisseaux (20) qui sont guidés dans la direction axiale des tiges filetées (4, 5), et que lors de la rotation du disque excentrique et lors du contact avec le diamètre grand (30) de celui-ci, les coulisseaux (20) sollicitent les manchons d'accouplement (8) précontraints dans la position découplée par les ressorts hélicoïdaux (15) et contrairement à la précontrainte de ressort de ceux-ci.
